# EUROPÄISCHE PATENTANMELDUNG

(11) **EP 1 591 292 A1**
(43) Veröffentlichungstag der Anmeldung: **02.11.2005**
(21) Anmeldenummer: 05103389.2
(22) Anmeldetag: 26.04.2005
(51) Int. Cl.: B60J 10/00

(54) **Verstärkungsträger, Dichtung mit einem solchen Verstärkungsträger und Verfahren zum Herstellen einer solchen Dichtung**

(30) Priorität: 28.04.2004 DE 102004020857
(71) Anmelder: Metzeler Automotive Profile Systems GmbH, 88131 Lindau/Bodensee (DE)
(72) Erfinder: Hemauer, Stephan, 88147 Achberg (DE)
(74) Vertreter: Schober, Christoph D.

(57) **Zusammenfassung**

Ein Verstärkungsträger, der insbesondere zum Armieren einer aus einem elastischen Werkstoff gefertigten Dichtung (10) dient, ist mit einem ersten Flankenabschnitt (21), einem zweiten Flankenabschnitt (23) und einem Mittelabschnitt (22), die sich parallel in einer Längsrichtung (x) erstrecken und in einer zu der Längsrichtung (x) orthogonalen Querrichtung (y) jeweils eine Breite (b₁, b₃, b₂) haben, versehen. Der Mittelabschnitt (22) verbindet den ersten Flankenabschnitt (21) und den zweiten Flankenabschnitt (23) in der Querrichtung (y) miteinander. Der erste Flankenabschnitt (21) und/oder der zweite Flankenabschnitt (23) und/oder der Mittelabschnitt (22) sind mit einer Vielzahl an Öffnungen (24, 25, 26) versehen, die einen geschlossenen Umfang aufweisen und in der Querrichtung (y) eine erste Weite (d₁) und in der Längsrichtung (x) eine zweite Weite (d₂) haben. Um den Einsatz eines die Umwelt beeinträchtigenden Haftvermittlers bei der Einbettung des Verstärkungsträgers in die Dichtung (10) entbehrlich zu machen, beträgt das Verhältnis von erster Weite (d₁) zu der Breite (b₁, b₂, b₃) höchstens 1 : 5.

## Beschreibung

Die Erfindung betrifft einen Verstärkungsträger, der insbesondere zum Armieren einer aus einem elastischen Werkstoff gefertigten Dichtung dient. Der Verstärkungsträger ist mit einem ersten Flankenabschnitt, einem zweiten Flankenabschnitt und einem Mittelabschnitt, die sich parallel in einer Längsrichtung erstrecken und in einer zu der Längsrichtung orthogonalen Querrichtung jeweils eine Breite haben, versehen. Der Mittelabschnitt verbindet den ersten Flankenabschnitt und den zweiten Flankenabschnitt in der Querrichtung miteinander. Der erste Flankenabschnitt, der zweite Flankenabschnitt und/oder der Mittelabschnitt sind mit einer Vielzahl an Öffnungen versehen, die einen geschlossenen Umfang aufweisen und in der Querrichtung eine erste Weite und in der Längsrichtung eine zweite Weite haben. Die Erfindung bezieht sich ferner auf eine Dichtung, die insbesondere bei einem Kraftfahrzeug Anwendung findet und mit einem Befestigungsabschnitt, der auf ein erstes Bauteil aufsteckbar ist, und wenigstens einem Dichtungsabschnitt, durch den ein zweites Bauteil abdichtbar ist, versehen ist. Weiterhin betrifft die Erfindung ein Verfahren zum Herstellen einer solchen Dichtung.

Ein Verstärkungsträger der eingangs genannten Art wird in der DE 40 21 191 A1 beschrieben. Der bekannte Verstärkungsträger dient dazu, eine aus einem elastomeren Werkstoff gefertigte Dichtung, die sich aus einem Befestigungsabschnitt und einem Dichtungsabschnitt zusammensetzt, im Bereich des Befestigungsabschnitts zu armieren, um eine zuverlässige Befestigung der Dichtung durch Aufstecken des Befestigungsabschnitts auf einen Flansch zu gewährleisten, Der im Querschnitt U-förmige Verstärkungsträger weist zwei Flankenabschnitte und einen die Flankenabschnitte miteinander verbindenden Mittelabschnitt auf. Die Flankenabschnitte sind mit Einschnitten versehen, die sich von dem freien Ende der Flankenabschnitte bis in den Mittelabschnitt hinein erstrecken. Der Mittelabschnitt ist mit Öffnungen versehen, die im Unterschied zu den Einschnitten einen geschlossenen Umfang haben. Die Öffnungen und die Einschnitte sind in der Längsrichtung des Verstärkungsträgers alternierend angeordnet, wobei sich die Öffnungen nahezu über die gesamte Breite des Mittelabschnitts und ein Stück weit in einen der Flankenabschnitte hinein erstrecken. Die Einschnitte ermöglichen, den Verstärkungsträger zu biegen, wenn dies die Form des Flansches, auf den die Dichtung aufgesteckt wird, erfordert. Die Öffnungen hingegen ermöglichen, den Verstärkungsträger in der Längsrichtung zu recken, um auf diese Weise der Dichtung eine Vorspannung zu verleihen. Die Vorspannung verhindert, dass die Dichtung, wenn sie gebogen wird, Falten wirft.

Ein Verstärkungsträger, der zum Armieren einer Dichtung dient und mit Einschnitten und Öffnungen versehen ist, die eine ausreichende Verformungsfähigkeit des Verstärkungsträgers gewährleisten, wenn die Dichtung gebogen wird, offenbaren ausserdem die DE 86 22 471 U1, DE 37 43 970 A1, DE 37 43 971 A1 und DE 199 02 543 A1. Den aus den vorgenannten Druckschriften bekannten Verstärkungsträgern ist gemeinsam, dass die Anordnung und Ausgestaltung der Einschnitte und Öffnungen vornehmlich dazu dient, den Verstärkungsträgern eine Verformungsfähigkeit zu verleihen, die ein praxisgerechtes Biegen, Recken oder Stauchen gestattet. Die Verstärkungsträger haben zudem gemein, dass sie während der Fertigung der Dichtung, die üblicherweise extrudiert wird, in diese eingebettet werden, Ein weiterer Aspekt, der bei der Gestaltung der Verstärkungsträger gewöhnlich Berücksichtigung findet, ist demzufolge das Vermeiden sogenannter Rattermarken, die sich in der Regel durch eine Schwindung der Dichtung im Bereich der Einschnitte und der Öffnungen ergeben.

Die bekannten Verstärkungsträger besehen in Hinsicht auf ihre originäre Funktion, eine Dichtung zu armieren, üblicherweise aus Metall, Um eine ausreichende Bindung zwischen einem metallenen Verstärkungsträger und einer Dichtung, die aus einem elastomeren Werkstoff besteht, zu erreichen, werden Haftvermittler eingesetzt, die vor der Extrusion der Dichtung auf den Verstärkungsträger aufgetragen werden. Der Einsatz von Haftvermittlern erhöht zum einen die Fertigungskosten und beeinträchtigt zum anderen die Umwelt.

Der Erfindung liegt die **Aufgabe** zugrunde, einen Verstärkungsträger zu schaffen, der den Einsatz eines die Umwelt beeinträchtigenden Haftvermittlers entbehrlich macht. Zudem sollen eine Dichtung, die mit einem solchen Verstärkungsträger versehen ist, und ein Verfahren zum Herstellen einer solchen Dichtung, angegeben werden.

Zur **Lösung** dieser Aufgabe ist bei einem Verstärkungsträger mit den eingangs genannten Merkmalen in Übereinstimmung mit Anspruch 1 erfindungsgemäss vorgesehen, dass das Verhältnis von erster Weite zu der Breite höchstens 1 : 5 beträgt.

Der erfindungsgemässe Verstärkungsträger beruht auf der Erkenntnis, in den Flankenabschnitten und/oder dem Mittelabschnitt Öffnungen vorzusehen, die über vergleichsweise geringe Abmessungen verfügen. Die Öffnungen bewirken auf diese Weise, dass bei der Extrusion einer Dichtung aus einem elastomeren Werkstoff eine Verzahnung zwischen dem Verstärkungsträger und dem elastomeren Werkstoff eintritt. Die Verzahnung stellt eine ausreichende Bindung zwischen dem Verstärkungsträger und der Dichtung sicher, so dass es des Einsatzes eines Haftvermittlers nicht bedarf. Es hat sich herausgestellt, dass eine ausreichende Verzahnung dann eintritt, wenn das Verhältnis der ersten Weite der Öffnungen zu der Breite der Flankenabschnitte oder des Mittelabschnitts höchstens 1 : 5 beträgt, das heisst, wenn die Breite wenigstens fünfmal grösser ist als die erste Weite. Die zweckmässigerweise durch Stanzen oder Bohren gefertigten Öffnungen lassen sich aufgrund ihrer verhältnismässig geringen Abmessungen grundsätzlich bei jedem herkömmlichen Verstärkungsträger zusätzlich zu vorhandenen Einschnitten und Ausnehmungen vorsehen.

Vorteilhafte Ausgestaltungen des erfindungsgemässen Verstärkungsträgers werden in den Ansprüchen 2 bis 9 definiert.

So hat es sich in Hinsicht auf verhältnismässig kleine Abmessungen der Öffnungen als vorteilhaft erwiesen, wenn das Verhältnis von erster Weite zu der Breite kleiner als 1 : 10, vorzugsweise kleiner als 1 : 20, ist. In diesen Zusammenhang ist es ferner von Vorteil, wenn das Verhältnis von erster Weite zu zweiter Weite annähernd 1 : 1 beträgt. Die Dimensionierung der Öffnungen ist in diesem Fall in der Querrichtung und in der Längsrichtung annähernd gleich.

In einer bevorzugten Ausgestaltung des erfindungsgemässen Verstärkungsträgers betragen die erste Weite und/oder die zweite Weite zwischen 0,1 mm und 5,0 mm, vorzugsweise zwischen 0,5 mm und 1,0 mm. Bei einer ersten Weite von beispielsweise 0,5 mm und einer Breite der Flankenabschnitte oder des Mittelabschnitts von beispielsweise 15 mm beträgt das Verhältnis von erster Weite zu der Breite 1 : 30.

Bevorzugt sind die Öffnungen kreisförmig oder polygonal, vorzugsweise quadratisch oder dreieckig. Kreisförmige Öffnungen lassen sich zweckmässigerweise durch Bohren fertigen, wohingegen beispielsweise quadratische Öffnungen sinnvollerweise durch Stanzen erzeugt werden.

In einer bevorzugten Ausgestaltung des erfindungsgemässen Verstärkungsträgers sind der erste Flankenabschnitt und/oder der zweite Flankenabschnitt und/oder der Mittelabschnitt mit wenigstens einer sich in der Längsrichtung erstreckenden Reihe an Öffnungen versehen. Die Öffnungen einer Reihe sind vorteilhafterweise in einem Abstand zueinander angeordnet, wobei das Verhältnis von Abstand zu der zweiten Weite wenigstens 1 : 1 beträgt. Ein geringer Abstand zwischen den Öffnungen ermöglicht eine hohe Anzahl an Öffnungen und trägt insofern zu einer zuverlässigen Verzahnung bei.

Um eine ausreichende Verformungsfähigkeit des Verstärkungsträgers zu gewährleisten, sind vorteilhafterweise der erste Flankenabschnitt und/oder der zweite Flankenabschnitt und/oder der Mittelabschnitt mit einer Vielzahl an sich in der Querrichtung erstreckenden Einschnitten versehen. Bevorzugt sind die Öffnungen und die Einschnitte in der Längsrichtung alternierend angeordnet, wobei sich ein Einschnitt und wenigstens eine Öffnung miteinander abwechseln. Folglich ist es möglich, dass sich je nach Anwendungsfall ein Einschnitt und eine vorgegebene Anzahl an Öffnungen einander abwechseln.

Zur Lösung der oben genannten Aufgabe wird in Übereinstimmung mit Anspruch 10 ausserdem eine Dichtung vorgeschlagen, die mit einem Befestigungsabschnitt, der auf ein erstes Bauteil aufsteckbar ist, und wenigstens einem Dichtungsabschnitt, durch den ein zweites Bauteil abdichtbar ist, versehen ist. Bei dem ersten Bauteil kann es sich beispielsweise um einen Flansch der Karosserie eines Kraftfahrzeugs handeln, wohingegen das zweite Bauteil beispielsweise eine Fensterscheibe ist. Der Befestigungsabschnitt wird durch den erfindungsgemässen Verstärkungsträger armiert. Der erfindungsgemässe Verstärkungsträger macht den Einsatz eines Haftvermittlers bei der Fertigung der Dichtung entbehrlich.

Weiterhin wird zur Lösung der oben genannten Aufgabe in Übereinstimmung mit Anspruch 12 ein Verfahren zum Herstellen einer Dichtung vorgeschlagen, das sich dadurch auszeichnet, dass ein Verstärkungsträger ohne Zuhilfenahme eines Haftvermittlers mit einem elastomeren Werkstoff umgeben wird, zum Beispiel bei der Extrusion der Dichtung.

Einzelheiten und weitere Vorteile der vorliegenden Erfindung ergeben sich aus der nachfolgenden Beschreibung eines bevorzugten Ausführungsbeispieles. In der das Ausführungsbeispiel lediglich schematisch darstellenden Zeichnung veranschaulichen im einzelnen:
- Fig. 1: einen Querschnitt durch eine Dichtung, die mittels eines Verstärkungsträgers armiert ist, und
- Fig. 2: eine Draufsicht auf den Verstärkungsträger gemäss Fig, 1 in einem flachen Zustand.

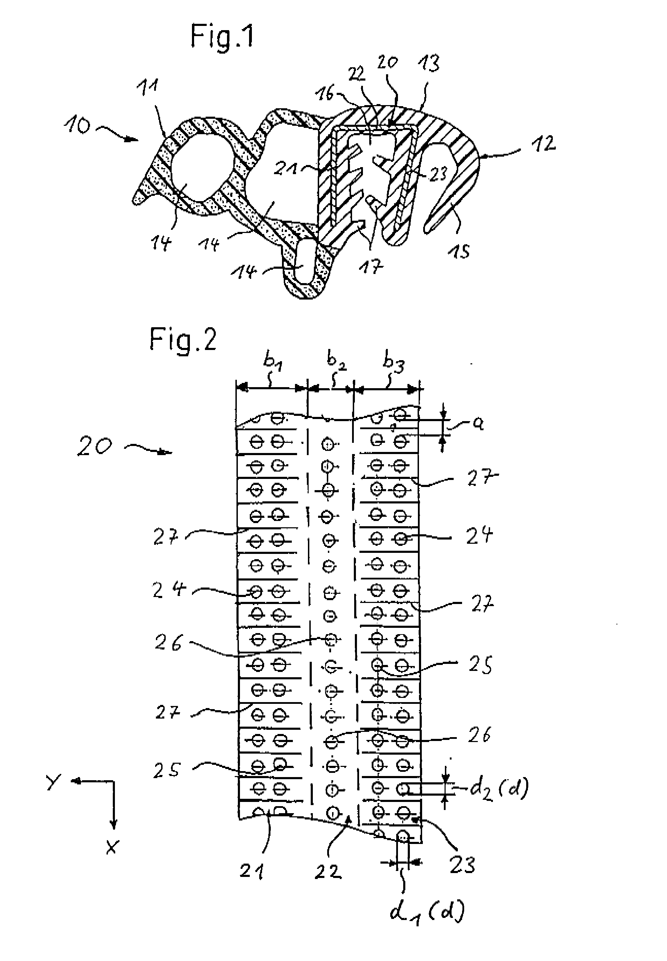

Die in Fig. 1 dargestellte Dichtung 10 dient beispielsweise dazu, die Fensterscheibe oder die Tür eines Kraftfahrzeugs abzudichten. Die Dichtung 10 weist zu diesem Zweck einen ersten Dichtungsabschnitt 11, einen zweiten Dichtungsabschnitt 12 und einen zwischen dem ersten Dichtungsabschnitt 11 und dem zweiten Dichtungsabschnitt 12 angeordneten Befestigungsabschnitt 13 auf. Der erste Dichtungsabschnitt 11 ist mit mehreren Hohlkammern 14 versehen und besteht aus einem verhältnismässig weichen Elastomer, beispielsweise Moosgummi. Der zweite Dichtungsabschnitt 12 wird durch eine Dichtlippe 15 gebildet, die, wie auch der Befestigungsabschnitt 13, aus einem härteren Elastomer besteht als der erste Dichtungsabschnitt 11. Die Dichtungsabschnitte 11, 12 und der Befestigungsabschnitt 13 lassen sich beispielsweise durch Koextrusion fertigen.

Der Befestigungsabschnitt 13 ist mit einer kanalförmigen Ausnehmung 16 versehen, an deren seitlichen Wandungen Haltelippen 17 angeordnet sind. Aufgrund der Ausnehmung 16 lässt sich der Befestigungsabschnitt 13 auf einen nicht dargestellten Flansch, beispielsweise der Tür eines Kraftfahrzeugs, aufstecken. Zu einer zuverlässigen Befestigung des Befestigungsabschnitts 13 auf dem Flansch tragen zum einen die Haltelippen 17 bei, die den Befestigungsabschnitt 13 kraftschlüssig und gegebenenfalls auch formschlüssig auf dem Flansch halten. Zum anderen trägt hierzu ein Verstärkungsträger 20 bei, der im Querschnitt U-förmig ist und die Ausnehmung 16 umgibt. Der eine ausreichende Formstabilität des Befestigungsabschnitts 13 gewährleistende Verstärkungsträger 20 setzt sich aus einem ersten Flankenabschnitt 21, einem Mittelabschnitt 22 und einem zweiten Flankenabschnitt 23 zusammen.

Wie insbesondere Fig. 2, die den Verstärkungsträger 20 mit nicht abgewinkelten Flankenabschnitten 21, 23 zeigt, zu erkennen gibt, verlaufen der erste Flankenabschnitt 21, der Mittelabschnitt 22 und der zweite Flankenabschnitt 23 in einer Längsrichtung x der Dichtung 10 parallel zueinander, wobei der Mittelabschnitt 22 die Flankenabschnitte 21, 23 in einer zu der Längsrichtung x orthogonalen Querrichtung y miteinander verbindet. Fig. 2 gibt ferner zu erkennen, dass der Verstärkungsträger 20 aus einem flachen Streifen, der in der Regel aus Metall besteht, gefertigt wird, indem die Flankenabschnitte 21, 23 von dem Mittelabschnitt 22 abgewinkelt werden.

Sowohl die Flankenabschnitte 21, 23 als auch der Mittelabschnitt 22 sind mit einer Vielzahl an Öffnungen 24, 25, 26 versehen. Die Öffnungen 24, 25, 26 weisen einen geschlossenen Umfang auf und haben in der Querrichtung y eine erste Weite d₁ und in der Längsrichtung x eine zweite Weite d₂. Aufgrund einer im vorliegenden Fall kreisförmigen Ausgestaltung der Öffnungen 24, 25, 26, die beispielsweise durch Bohren oder Stanzen des in Fig. 2 gezeigten Streifens erzeugt werden, stimmen die erste Weite d₁ und die zweite Weite d₂ überein und entsprechen dem Durchmesser d der Öffnungen 24, 25, 26. In Abhängigkeit von dem jeweiligen Anwendungsfall können die Öffnungen 24, 25, 26 auch polygonal, beispielsweise dreieckig, sein und insofern eine von der erste Weite d₁ unterschiedliche zweite Weite d₂ haben.

Der Durchmesser d der Öffnungen 24, 25, 26 kann zwischen 0,1 mm und 5,0 mm betragen und beläuft sich im vorliegenden Fall auf 0,75 mm. Die Breite b₁ des ersten Flankenabschnitts 21 und die Breite b₃ des zweiten Flankenabschnitts 23 betragen im vorliegenden Fall jeweils ca. 25 mm, wohingegen sich die Breite b₂ des Mittelabschnitts 22 auf ca. 20 mm beläuft. Das Verhältnis des Durchmessers d der Öffnungen 24, 25 im Bereich der Flankenabschnitte 21, 23 zu der Breite b₁, b₃ der Flankenabschnitte 21, 23 beträgt demzufolge jeweils ca. 0,03 oder 3 : 100. Das Verhältnis des Durchmessers d der Öffnungen 26 im Bereich des Mittelabschnitts 22 zu der Breite b₂ des Mittelabschnitts 22 beträgt 0,035 oder 3 : 80. Sowohl im Bereich der Flankenabschnitte 21, 23 als auch im Bereich des Mittelabschnitts 22 ist das Verhältnis des Durchmessers d der Öffnungen 24, 25, 26 zu der Breite b₁, b₂, b₃ somit kleiner als 0,05 oder 1 : 20.

Weiterhin gibt Fig. 2 zu erkennen, dass die Öffnungen 24, 25, 26 in einer sich in der Längsrichtung x erstreckenden Reihe angeordnet sind. Die Flankenabschnitte 21, 23 weisen jeweils eine äussere Reihe an Öffnungen 24 und eine innere Reihe an Öffnungen 25 auf, wohingegen der Mittelabschnitt 22 mit einer mittleren Reihe an Öffnungen 26 versehen ist. Die Öffnungen 24, 25, 26 einer Reihe sind in einem Abstand a zueinander angeordnet, wobei der Abstand a beispielsweise 1,5 mm beträgt. Das Verhältnis von Abstand a zu dem Durchmesser d der Öffnungen 24, 25, 26 beträgt demzufolge 2 : 1.

Der erste Flankenabschnitt 21 und der zweite Flankenabschnitt 23 sind jeweils mit einer Vielzahl an Einschnitten 27 versehen, die sich in der Querrichtung y von dem freien Ende der Flankenabschnitte 21, 23 bis kurz vor den Mittelabschnitt 22 erstrecken. Die eine ausreichende Verformungsfähigkeit des Verstärkungsträgers 20 gewährleistenden Einschnitte 27 können sich im Bedarfsfall auch ein Stück weit in den Mittelabschnitt 22 erstrecken, wie es beispielsweise aus der DE 86 22 471 U1 bekannt ist. Die Öffnungen 24, 25 und die Einschnitte 27 sind in der Längsrichtung x alternierend angeordnet, wobei sich ein Einschnitt 27 und eine Öffnung 24, 25 einander abwechseln,

Der zuvor beschriebene Verstärkungsträger 20 zeichnet sich durch eine Vielzahl an Öffnungen 24, 25, 26 aus, die einen Durchmesser d aufweisen, der im Vergleich zu den Abmessungen des Verstärkungsträgers 20 gering ist.

Die vergleichsweise geringen Abmessungen der Öffnungen 24, 25, 26 bewirken, dass bei der Extrusion der Dichtung 10 eine Verzahnung zwischen dem Verstärkungsträger 20 und dem elastomeren Werkstoff, aus dem die Dichtung 10 extrudiert wird, eintritt. Diese Verzahnung gewährleistet eine ausreichende Bindung zwischen dem Befestigungsabschnitt 13 und dem Verstärkungsträger 20 und macht den Einsatz eines in der Regel die Umwelt beeinträchtigenden Haftvermittlers entbehrlich. Einer umweltgerechten Verfahrensführung wird somit Rechnung getragen.

### Bezugszeichenliste

- 10: Dichtung
- 11: erster Dichtungsabschnitt
- 12: zweiter Dichtungsabschnitt
- 13: Befestigungsabschnitt
- 14: Hohlkammer
- 15: Dichtlippe
- 16: Ausnehmung
- 17: Haltelippe

- 20: Verstärkungsträger
- 21: erster Flankenabschnitt
- 22: Mittelabschnitt
- 23: zweiter Flankenabschnitt
- 24: Öffnung der äusseren Reihe
- 25: Öffnung der inneren Reihe
- 26: Öffnung der mittleren Reihe
- 27: Einschnitt

- a: Abstand
- b₁: Breite
- b₂: Breite
- b₃: Breite
- d₁: erste Weite
- d₂: zweite Weite
- d: Durchmesser
- x: Längsrichtung
- y: Querrichtung

## Patentansprüche

1. Verstärkungsträger, insbesondere zum Armieren einer aus einem elastischen Werkstoff gefertigten Dichtung (10), mit einem ersten Flankenabschnitt (21), einem zweiten Flankenabschnitt (23) und einem Mittelabschnitt (22), die sich parallel in einer Längsrichtung (x) erstrecken und in einer zu der Längsrichtung (x) orthogonalen Querrichtung (y) jeweils eine Breite (b₁, b₃, b₂) haben, wobei der Mittelabschnitt (22) den ersten Flankenabschnitt (21) und den zweiten Flankenabschnitt (23) in der Querrichtung (y) miteinander verbindet und wobei der erste Flankenabschnitt (21) und/oder der zweite Flankenabschnitt (23) und/oder der Mittelabschnitt (22) mit einer Vielzahl an Öffnungen (24, 25, 26), die einen geschlossenen Umfang aufweisen und in der Querrichtung (y) eine erste Weite (d₁) und in der Längsrichtung (x) eine zweite Weite (d₂) haben, versehen sind, **dadurch gekennzeichnet, dass** das Verhältnis von erster Weite (d₁) zu der Breite (b₁, b₂, b₃) höchstens 1 : 5 beträgt.

2. Verstärkungsträger nach Anspruch 1, **dadurch gekennzeichnet, dass** das Verhältnis von erster Weite (d₁) zu der Breite (b₁, b₂, b₃) kleiner als 1 : 10, vorzugsweise kleiner als 1 : 20, ist.

3. Verstärkungsträger nach Anspruch 1 oder 2, **dadurch gekennzeichnet, dass** das Verhältnis von erster Weite (d₁) zu zweiter Weite (d₂) annähernd 1 : 1 beträgt.

4. Verstärkungsträger nach einem der Ansprüche 1 bis 3, **dadurch gekennzeichnet, dass** die erste Weite (d₁) und/oder die zweite Weite (d₂) zwischen 0,1 mm und 5,0 mm, vorzugsweise zwischen 0,5 mm und 1,0 mm, betragen.

5. Verstärkungsträger nach einem der Ansprüche 1 bis 4, **dadurch gekennzeichnet, dass** die Öffnungen (24, 25, 26) kreisförmig oder polygonal, vorzugsweise quadratisch oder dreieckig, sind.

6. Verstärkungsträger nach einem der Ansprüche 1 bis 5, **dadurch gekennzeichnet, dass** der erste Flankenabschnitt (21) und/oder der zweite Flankenabschnitt (23) und/oder der Mittelabschnitt (22) mit wenigstens einer sich in der Längsrichtung (x) erstreckenden Reihe an Öffnungen (24, 25, 26) versehen sind.

7. Verstärkungsträger nach Anspruch 6, **dadurch gekennzeichnet, dass** die Öffnungen (24, 25, 26) einer Reihe in einem Abstand (a) zueinander angeordnet sind, wobei das Verhältnis von Abstand (a) zu der zweiten Weite (d₂) wenigstens 1 : 1 beträgt.

8. Verstärkungsträger nach einem der Ansprüche 1 bis 7, **dadurch gekennzeichnet, dass** der erste Flankenabschnitt (21) und/oder der zweite Flankenabschnitt (23) und/oder der Mittelabschnitt (22) mit einer Vielzahl an sich in der Querrichtung (y) erstreckenden Einschnitten (27) versehen sind.

9. Verstärkungsträger nach Anspruch 8, **dadurch gekennzeichnet, dass** die Öffnungen (24, 25) und die Einschnitte (27) in der Längsrichtung (x) alternierend angeordnet sind, wobei sich ein Einschnitt (27) und wenigstens eine Öffnung (24, 25) einander abwechseln.

10. Dichtung, insbesondere für ein Kraftfahrzeug, mit einem Befestigungsabschnitt (13), der auf ein erstes Bauteil aufsteckbar ist, und wenigstens einem Dichtungsabschnitt (11, 12), durch den ein zweites Bauteil abdichtbar ist, **dadurch gekennzeichnet, dass** der Befestigungsabschnitt (13) durch einen Verstärkungsträger (20) nach einem der Ansprüche 1 bis 9 armiert ist.

11. Dichtung nach Anspruch 10, **dadurch gekennzeichnet, dass** der Befestigungsabschnitt (13) mit einer kanalförmigen Ausnehmung (16) versehen ist, wobei der Verstärkungsträger (20) die Ausnehmung (16) umgibt.

12. Verfahren zum Herstellen einer Dichtung nach Anspruch 10 oder 11, **dadurch gekennzeichnet, dass** der Verstärkungsträger (20) ohne Zuhilfenahme eines Haftvermittlers mit einem elastomeren Werkstoff umgeben wird.

13. Verfahren nach Anspruch 12, **dadurch gekennzeichnet, dass** der elastomere Werkstoff ein thermoplastisches Elastomer oder Ethylen-Propylen-Dien-Kautschuk ist.

14. Verfahren nach Anspruch 12 oder 13, **dadurch gekennzeichnet, dass** die Öffnungen (24, 25, 26) des Verstärkungsträgers (20) durch Bohren oder Stanzen gefertigt werden.
